# EUROPEAN PATENT SPECIFICATION

(11) **EP 0 448 408 B1**
(45) Date of publication and mention of the grant of the patent: **20.09.1995**
(21) Application number: 91302526.8
(22) Date of filing: 22.03.1991
(51) Int. Cl.: G11B 7/26, B23K 26/02, G11B 23/00

(54) **Optical cutting method and optical cutter**
Optisches Schneidverfahren und optisches Schneidgerät
Méthode de découpe optique et découpeur optique

(30) Priority: 23.03.1990 JP 72075/90
(43) Date of publication of application: 25.09.1991
(73) Proprietor: CANON KABUSHIKI KAISHA, Tokyo (JP)
(72) Inventor: Matsumura, Susumu, c/o Canon Kabushiki Kaisha, Tokyo (JP); Yashima, Masataka, c/o Canon Kabushiki Kaisha, Tokyo (JP); Santoh, Tsuyoshi, c/o Canon Kabushiki Kaisha, Tokyo (JP); Kanome, Osamu, c/o Canon Kabushiki Kaisha, Tokyo (JP); Matsumoto, Kazuya, c/o Canon Kabushiki Kaisha, Tokyo (JP)
(74) Representative: Beresford, Keith Denis Lewis

(56) References cited:
- DE-A- 3 300 208
- PATENT ABSTRACTS OF JAPAN vol. 013, no. 244 (M-834) 07 June 1989,& JP-A-01 053788 (SEIDENSHA DENSHI KOGYO K.K.) 01 March 1989,
- PATENT ABSTRACTS OF JAPAN vol. 013, no. 174 (C-589) 25 April 1989,& JP-A-01 004417 (TOSHIBA CORP.) 09 January 1989,
- PATENT ABSTRACTS OF JAPAN vol. 12, no. 274 (M-725)(3121) 29 July 1988,& JP-A-63 56379 (AMADA CO LTD) 10 March 1988,

## Description

The present invention relates to an optical cutting method for cutting out a disk-shaped film from a sheet film, and an optical cutter employed therefor.

### Related Background Art

Optical information-recording-reproducing apparatuses for recording and reproducing information by use of light include a ROM type ones allowing reproduction only, a WORM type ones (or a DRAW type ones) allowing only one time of writing, an erasable type ones allowing repeated writing and erasing, and other types. Any of the types of the apparatuses have characteristics of high-density recording, exchangeability of information recording mediums, and so forth. Among them, photomagnetic disk apparatuses are highly perfected as an erasable type, and are attracting attention.

In these optical disk apparatuses, a micro-spot light beam of a size of as small as approximately 1 µm has to be projected onto the information recording face of the optical disk for reproducing and writing information in high density on the disk-shaped optical information recording medium (hereinafter referred to as an "optical disk"). Accordingly, a light-transmissive substrate (usually having a thickness of about 1.2 mm) constituting the optical disk should satisfy severe requirements as to the optical properties, including precision of thickness, uniformity of refractive index, retardation of birefringence, and so forth.

Furthermore, on the light-transmissive substrate, grooves or pre-pits have to be formed for guiding an optical head, which renders the light-transmissive substrate constituting the optical disk expensive. Heretofore, injection-molded polycarbonate resins have been investigated for the light-transmissive substrate having grooves or pre-pits. However, the light-transmissive substrates are still expensive because of restriction in molding conditions and resin components for suppressing the aforementioned birefringence, which makes optical disks expensive and retards the spreading of the use of optical information-recording-reproducing apparatus.

A method for producing optical disks at a low cost is disclosed in Japanese Patent Publication No. 63-31847. In this method, a film in a form of a wound sheet is employed, and grooves or information pits which have preliminarily been prepared on an original disk are transferred thereon continuously according to a 2P method to produce an optical disks at a low cost. In another method for forming grooves or pits on a sheet film, a sheet of a thermoplastic resin is formed by employing a hot roller having an original disk to transfer simultaneously and continuously the grooves or information pits onto the sheet film.

From the sheet film prepared as described above, individual base film for disk should be cut out with high positional precision without impairing optical characteristics, especially flatness and low birefringence. However, no apparatus suitable therefor has been found. For example, known stamping machines for stamping out a disk-shaped film by mechanical cutting are not satisfactory in positional precision. In particular, known stamping machines are unsatisfactory, for optical disks for a peripheral memory device of a computor, in precision of inside diameter (or concentricity) for inserting circular metal plate at the center portion of the optical disk.

Moreover, for the purpose of producing optical disks in high speed and at a low cost, the conventional methods of mechanical cutting cannot simultaneously satisfy the requirements (a), (b), and (c) below:
(a) suitability for a continuous production process,
(b) high precision in cutting position, and
(c) no deterioration of optical performances required for an optical disk (flatness, low birefringence, etc.).

The laser cutting of disks or plates is generally known for example from documents JP-A-01-053788 and JP-A-01-004417.

### SUMMARY OF THE INVENTION

An object of the present invention is to provide an optical cutting method which is suitable for cutting out a disk-shaped film from a sheet film continuously with high precision of cutting without impairment of optical performances of the disk-shaped film.

Another object of the present invention is to provide a cutting machine suitable for the optical cutting method.

According to an aspect of the present invention, there is provided an optical cutting method comprising a step of detecting a center position on a sheet film with a position-detecting light flux; and a step of cutting out a disk film from the sheet film by projecting a cutting laser beam along circumference of a substantially circular form around the detected center position.

According to another aspect of the present invention, there is provided an optical cutter comprising a light source emitting a position-detecting light flux; a laser source emitting a cutting laser beam; a position-detecting means for detecting a center position on a sheet film with the position-detecting light flux; and an arm for introducing the cutting laser beam onto the sheet film, the arm rotating around the detected center position.

### BRIEF DESCRIPTION OF THE DRAWINGS

Fig. 1 is a side view of an example of the optical cutter of the present invention.

Fig. 2 is a plan view of the optical cutter shown in Fig. 1.

Fig. 3 is a side view of another example of the optical cutter of the present invention.

Fig. 4 is a cross-sectional view of an example of a disk film having been cut out by the optical cutter shown in Fig. 1.

Fig. 5 is a side view of still another optical cutter of the present invention.

Fig. 6 is a plan view illustrating an example of a positional relation of sheet film with a position-detecting means.

Fig. 7 is a flow chart of a program of judgement in center detection.

Fig. 8 and Fig. 9 illustrate respectively a further example of positional relation of a sheet film with a position-detecting means.

Fit. 10 is an oblique view of an example of the mirror for dividing the laser beam.

Fig. 11 is a cross-sectional view of the mirror shown in Fig. 10.

### DESCRIPTION OF THE PREFERRED EMBODIMENT

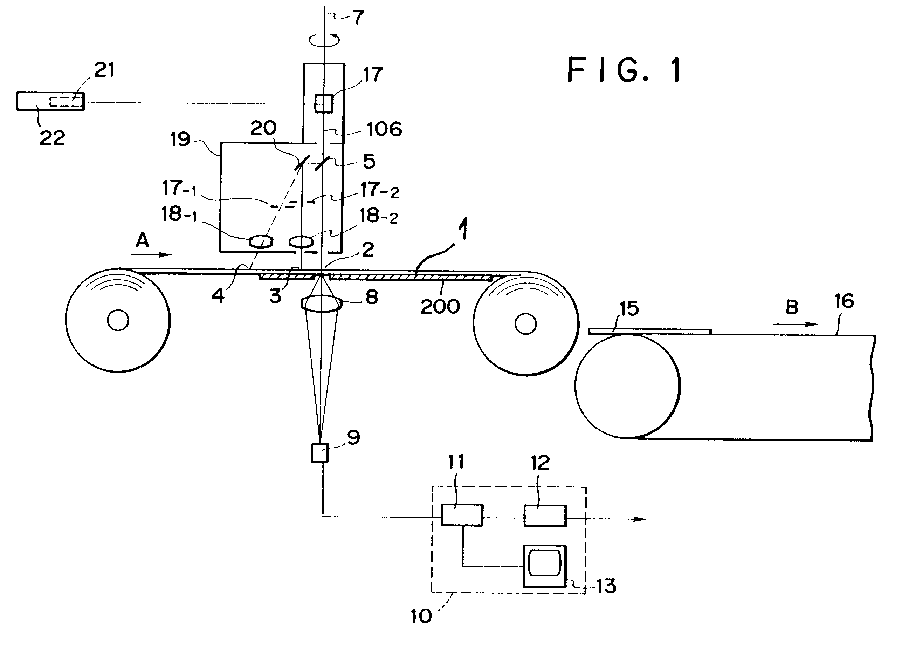

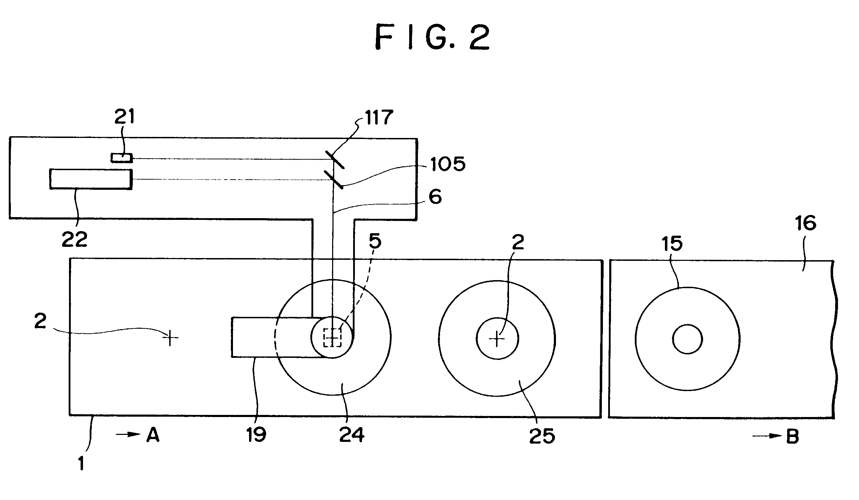

In Fig. 1 and Fig. 2, on the sheet film 1 from which a disk film is to be cut out, a center mark 2 is formed to show the center position of the disk film. The sheet film 1 is pulled out from a rolled state in the direction shown by the arrow mark A, and disk films are cut out from the sheet film. The sheet film moves on a supporting plate 200. Then the sheet film is wound up in a rolled state.

Onto the cut-out disk film to be used as a base film of an optical disk, grooves or pre-pits together with a center mark 2 are transferred from the original disk according to a method, for example, disclosed in Japanese Patent Publication No. 63-31847. In such a manner, the center mark 2 is formed with high precision relative to the grooves or pre-pits.

In the present invention, the center position of the disk film is detected with a position-detecting light flux, for example, with He-Ne laser beam. The disk film is cut out with a laser beam, for example, with carbon dioxide laser beam.

The cutting laser beam from the laser beam source 22 and the position-detecting light flux from the light source 21 are reflected respectively by a dichroic mirror 105 and a mirror 117 as shown in Fig. 2, and pass the same light path 6. Thereafter the cutting laser beam and the position-detecting light flux are reflected by a mirror 17 as a first optical system and reach a dichroic mirror 5 as a light flux deflecting means. The position-detecting light flux (e.g., He-Ne laser beam (λ=633nm)) is transmitted through the dichroic mirror 5, and introduced along the rotation axis 7 of an arm 19 to illuminate the center mark 2 on the sheet film 1 below. The light path 106 of the light flux reflected by the mirror 17 coincides with the rotation axis 7. The position of the center mark 2 is detected by the position-detecting means as such that an image of the center mark 2 is formed by an image-forming lens 8 on an image pick-up tube 9 and coincidence of the center mark 2 with the center position is judged by means of an image processor 10.

The image processor 10, which comprises a frame memory 11, a CPU 12, and a monitor CRT 13, will conduct sampling of a TV signal from the image pick-up tube 9 and memorizes it as a digital data. The arm 19 integrated with the image-forming lens 8 and the image pick-up tube 9 is moved by a position-registration means, such as a known XY slider, not shown in the figure, until the center mark 2 is judged to be on the center of the image pick-up tube 9. When the center mark 2 is judged to be in the correct position, the light shutter 17-2 opens to form a light spot 3 of the cutting laser beam on the sheet film material 1 by an objective lens 18-2. In this state, the arm 19 rotates one round around the rotation axis 7 by a rotation driving means, not shown in the figure, to cut an inner circumference of the disk film by the light spot 3.

Thereafter, the light shutter 17-2 closes, and the mirror 20 rotates at a predetermined angle, and the light shutter 17-1 opens to form a light spot 4 of a cutting laser beam on the sheet film material 1 by an objective lens 18-1. In this state, the arm 19 rotates again one round around to cut an outer circumference of the disk film by the light spot 4. The mirror 20, the pairs of the light shutters 17-1 and 17-2 and the objective lenses 18-1 and 18-2 constitute a second optical system.

Fig 2 is a plan view of this apparatus. The light flux from the light source 21 and the laser beam from the laser source 22 are superposed and made to pass together through the light path 6, and reach the dichroic mirror 5. In Fig. 2, the mirror 17 is not shown. On the sheet film 1, a plurality of center marks 2 are formed. In the figure the disk film 24 is just being cut out, and the disk film 25 has already been cut out.

The arm 19 rotates around the rotation axis 7 together with the dichroic mirror 5, the mirror 20, light shutters 17-1 and 17-2, and a pair of the objective lenses 18-1 and 18-2 held thereon. The disk film 15 having been cut out is delivered in the direction shown by the arrow mark A and then delivered by a belt conveyor 16 moving in the direction shown by the arrow mark B to the next process, where an optical disk is completed, for example, by laminating layers such as a recording layer or a protective layer on the disk film base 15.

The judgement of the coincidence of the center mark 2 with the rotation center of the arm 19 is made by the image processor 10 of the position-detecting means. This judgement can be made with sufficient precision according to a known image-processing technique such as a template method.

In the example, the rotation speed of the arm 19 is decided depending on the light intensity distributions of the two light spots 3 and 4 formed, for example, by a carbon dioxide laser beam, and on the thickness of the sheet film 1 to be cut out. A carbon dioxide gas laser enables extremely high-speed cutting because of its high intensity of the output light beam.

For improving further the positional precision, another position mark may be formed in addition to the center mark 2 of the disk film 24, for example, at a position in vicinity of the outer circumference of the disk film 24 where no inconvenience in use is caused by employing a position-detecting means and a position-detecting light flux.

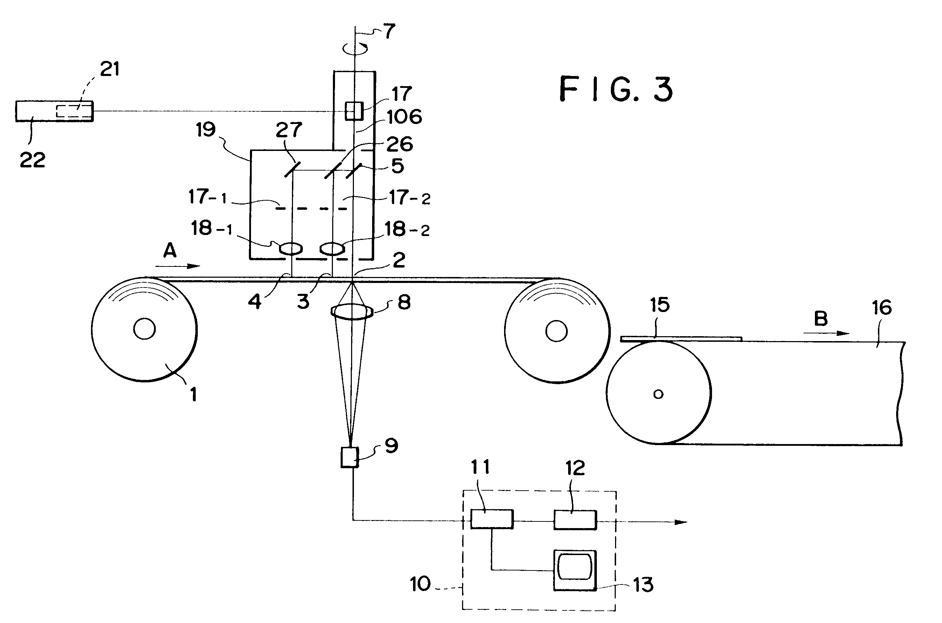

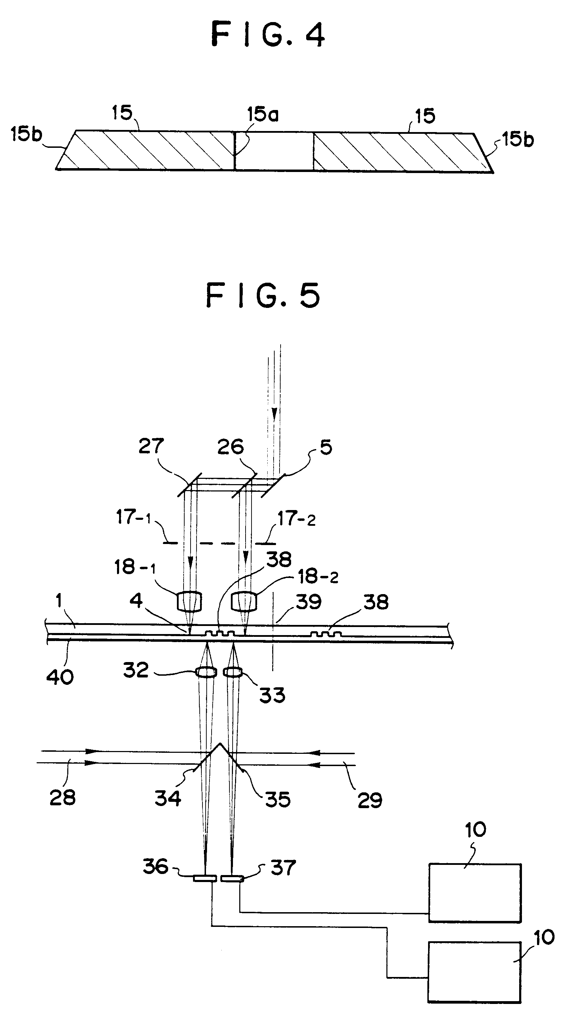

Fig. 3 shows a second example of the present invention. The same designation numbers as in the first example are given to the same members. In the first example, the inner circumference portion 15a of the disk film 15 is cut clearly, while the outer circumference portion 15b thereof may be cut in taper, because of oblique introduction of a cutting incident beam, as shown by the cross-sectional view of the disk film 15 after the cutting in Fig. 4. This disadvantage is cancelled in this example.

In Fig. 3, the cutting laser beam reflected by a dichroic mirror 5 is projected by a half mirror 26 and a mirror 27 perpendicularly onto a sheet film 1, forming two light spots 3 and 4. Accordingly, with the rotation of the dichroic mirror 5 with the arm 19, both the inner circumference portion and the outer circumference portion are scanned and cut simultaneously by perpendicularly introduced light spot, which enables shortening of the processing time.

Fig. 5 shows a third example of the present invention, in which the position-detecting light flux is changed from the type shown in Fig. 3 without changing the type of the cutting light beam. In the third example, the position-detecting light fluxes 28 and 29 are introduced through light paths separate from the paths of the cutting laser beam, and are respectively reflected by the half mirrors 34 and 35, detecting respectively the outer boundary and the inner boundary of the groove region 38 formed on the sheet film 1. In the third example shown in Fig. 5, the center position 39 of the disk film to be cut out is detected by utilizing the grooves or the pre-pits formed on the sheet film 1. Additionally, in the example shown in Fig. 5, layer constitution 40 is formed including a recording layer and a protective layer on the sheet film 1, thereby an optical disk being completed only by cutting out the sheet film in a disk shape.

In Fig. 5, the center position 39 is detected as described below. The position-detecting light fluxes 28 and 29 are reflected by the sheet film 1, and the images of the reflected light are formed by the image-forming lenses 32 and 33 respectively on CCD line sensors 36 and 37. The diffracted light at grooves 38 is reduced because of the diffraction of light to the outside of the pupils of the image-forming lenses 32 and 33 (or in other words, the f-numbers of the image-forming lenses 32 and 33 are designed to meet this requirement). On the other hand, in the portion having no grooves 38, the diffracted light is bright because of no loss of quantity of light by diffraction. Accordingly, the region having grooves 38 is judged from the output wave form of the CCD line sensors 36 and 37.

In principle, the center position 39 of the disk can be determined by detecting either one of the inner circumference of the region having the grooves 38 (hereinafter referred to as a "inner groove circumference") or the outer circumference of the region (hereinafter referred to as a "outer groove circumference"). In this example, however, the center position 39 is determined from the positions of both of the inner groove circumference and the outer groove circumference for decreasing the measurement error in the position-detecting means.

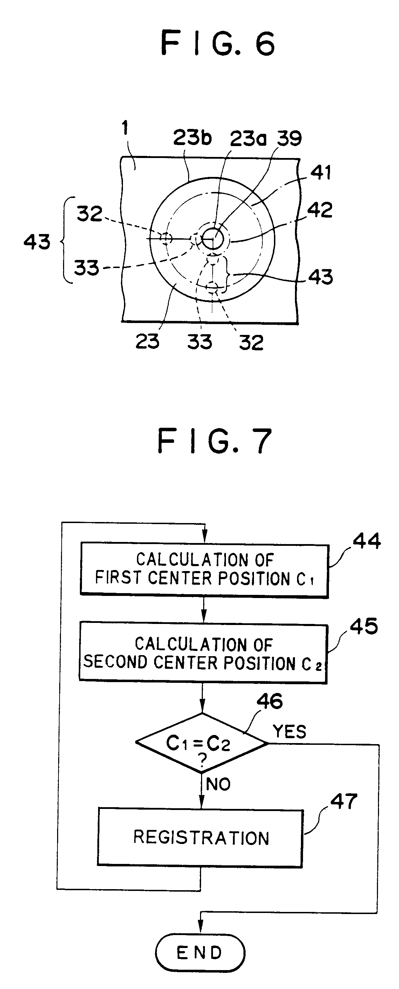

Fig. 6 is a plan view of an optical disk to be cut out. The outer groove circumference 41, the inner groove circumference 42, and the inner circumference 23a and the outer circumference 23b of the optical disk 23 to be cut are shown in Fig. 6. In the example shown in Fig. 6, two position-detecting units 43 respectively having a pair of image-forming lenses 32 and 33, a CCD line sensor, not shown in the figure, and position-detecting light fluxes for the pair of the image-forming lenses are 32 and 33 equipped in two directions perpendicular to each other. The constitution of each of the detecting unit 43 is the same as shown in Fig. 5. The two position-detecting units 43 in perpendicular directions are employed for preventing a possible error in detecting the center position 39 which may be caused, when only one detecting unit 43 is used, by positional deviation of the objected optical disk 23 in a vertical direction in the figure.

Fig. 7 shows a judging program flow for judging whether or not the center position 39 of the optical disk 23 coincides with the rotation axis 7 of the arm 19 of the optical cutter. In the step 44, the output from a first position-detecting unit is treated to determine the position of the first center C₁ (X₁, Y₁). In the same manner, in the step 45, the output from a second position-detecting unit is treated to determine the position of the second center C₂ (X₂, Y₂). In the step 46, judgement is made whether the center position C₁ coincides with the center position C₂ within a permissible error (e.g., 10 µm). If the two centers are judged to coincide, the optical disk 23 to be cut out is considered to be set in a correct position, and is subjected to cutting. If the two centers are judged not to coincide, the deviations in X direction and Y direction are respectively determined in the step 47, and the arm 19 of the optical cutter and the position-detecting means are moved to cancel the deviations by a registration means not shown in the figure. Thereafter the step 44 starts again.

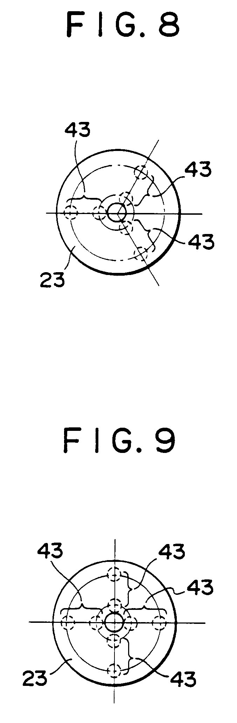

For detecting the center position 39 of the optical disk more precisely, three or more position-detecting units 43 may be employed as shown in Fig. 8 and Fig. 9.

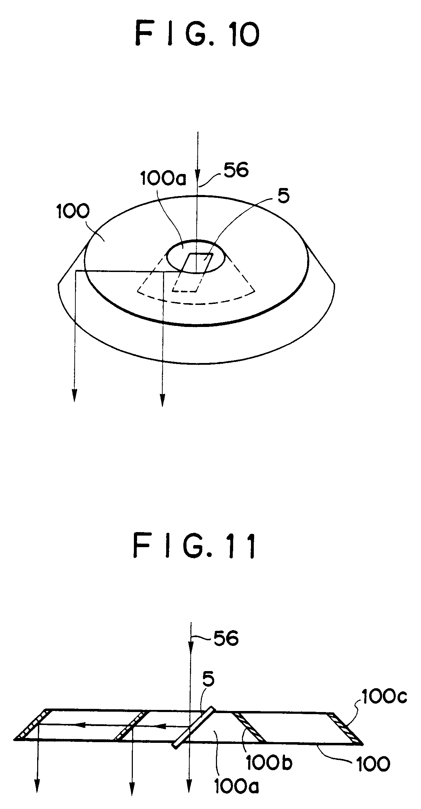

Fig. 10 and Fig. 11 show a mirror 100 which has both the function of the half mirror 26 and the function of the mirror 27 shown in Fig. 3. The mirror 100 is in a shape of a truncated cone having a through-hole 100a in the center. The inside wall 100b forming the through-hole 100a is parallel to the outside wall 100c of the mirror 100. The inside wall 100b serves as a half mirror corresponding to the half mirror 26, and the outside wall 100c serves as a mirror corresponding to the mirror 27. The region between the inside wall 100b and the outside wall 100c is a space. In the case when the mirror 100 is employed in stead of the half mirror 26 and the mirror 27 shown in the Fig. 3, a dichroic mirror 5 is provided inside the through-hole 100a, and the axis 56 of the mirror 100 is made to be the same as the rotation axis 7.

By use of the mirror 100, the scanning of the light spots 3 and 4 can be made only by rotating the dichroic mirror 5 and the objective lenses 18-1 and 18-2 together with the arm 19 without rotating the mirror 100, so that the the arm 19 may be made light-weight, and high-speed cutting may be made feasible.

The cutting method of the present invention, which is constituted as described above, is suitable for a continuous process, and achieves high precision of a cutting position without deterioration of the optical performance of an optical disk.

## Claims

1. An optical cutting method comprising a step of detecting a center position (2) on a sheet film (1) with a position-detecting light flux; and a step of cutting out a disk film (15) from the sheet film by projecting a cutting laser beam (3,4) along circumference of a substantially circular form around the detected center position (2).

2. The optical cutting method of Claim 1, wherein the position-detecting light flux is a laser beam.

3. The optical cutting method of Claim 1, wherein a center mark (2) is formed at the center position on the sheet film (1), and the center mark (2) is detected with the position-detecting light flux.

4. The optical cutting method of Claim 1, wherein grooves or pre-pits are detected by the position-detecting light flux to determine the center position (2).

5. The optical cutting method of Claim 1, wherein the center position (2) is detected by use of a plurality of position-detecting light fluxes.

6. The optical cutting method of Claim 1, wherein the cutting laser beam is divided into a plurality of beams which are simultaneously used for cutting.

7. An optical cutter comprising a light source (21) emitting a position-detecting light flux; a laser source (22) emitting a cutting laser beam; a position-detecting means (9,10) for detecting a center position (2) on a sheet film (1) with the position-detecting light flux; and an arm (19) for introducing the cutting laser beam onto the sheet film (1), the arm (19) rotating around the detected center position (2).

8. The optical cutter of Claim 7, wherein the position-detecting light flux is a laser beam.

9. The optical cutter of Claim 7, wherein the center position (2) is detected by use of a plurality of position-detecting light fluxes.

10. The optical cutting method of Claim 7, wherein the cutting laser beam is divided into a plurality of beams which are simultaneously used for cutting.

## Patentansprüche

1. Optisches Schneidverfahren, das aufweist:
- einen Schritt des Erfassens einer Mittenmarke (2) auf einer Folienbahn (1) mit einem Positionserfassungs-Lichtstrom und
- einen Schritt des Ausschneidens einer Folienscheibe (15) aus der Folienbahn durch Projizieren eines Laserschneidstrahls (3, 4) entlang des Umfangs mit einer im wesentlichen kreisförmigen Ausbildung um die erfaßte Mittenmarke (2) herum.

2. Optisches Schneidverfahren nach Anspruch 1, wobei der Positionserfassungs-Lichtstrom ein Laserstrahl ist.

3. Optisches Schneidverfahren nach Anspruch 1, wobei eine Mittenmarke (2) in der Mittenposition auf der Folienbahn (1) ausgebildet ist und die Mittenmarke (2) mit dem Positionserfassungs-Lichtstrom erfaßt wird.

4. Optisches Schneidverfahren nach Anspruch 1, wobei die Ausnehmungen oder Vorvertiefungen durch den Positionserfassungs-Lichtstrom erfaßt werden, um die Mittenmarke (2) zu bestimmen.

5. Optisches Schneidverfahren nach Anspruch 1, wobei die Mittenmarke (2) durch den Einsatz einer Vielzahl von Positionserfassungs-Lichtströmen erfaßt wird.

6. Optisches Schneidverfahren nach Anspruch 1, wobei der Laserschneidstrahl in eine Vielzahl von Strahlen aufgeteilt wird, die gleichzeitig zum Schneiden verwendet werden.

7. Optische Schneidvorrichtung, die aufweist:
- eine Lichtquelle (21), die einen Positionserfassungs-Lichtstrom abstrahlt,
- eine Laserstrahlquelle (22), die einen Laserschneidstrahl erzeugt,
- eine Positionserfassungs-Vorrichtung (9, 10) zum Erfassen einer Mittenmarke (2) auf einer Folienbahn (1) mit dem Positionserfassungs-Lichtstrom, und
- einen Arm (19) zum Einführen des Laserschneidstrahls auf die Folienbahn (1), wobei sich der Arm (19) um die erfaßte Mittenmarke (2) herum dreht.

8. Optische Schneidvorrichtung nach Anspruch 7, wobei der Positionserfassungs-Lichtstrom ein Laserstrahl ist.

9. Optische Schneidvorrichtung nach Anspruch 7, wobei die Mittenmarke (2) durch den Einsatz einer Vielzahl von Positionserfassungs-Lichtströmen erfaßt wird.

10. Optisches Schneidverfahren nach Anspruch 7, wobei der Laserschneidstrahl in eine Vielzahl von Strahlen aufgeteilt ist, die gleichzeitig zum Schneiden verwendet werden.

## Revendications

1. Procédé de découpage optique comprenant une étape de détection de la position (2) d'un centre sur un film (1) en forme de feuille avec un flux lumineux de détection de position; et une étape de découpage d'un film (15) en forme de disque dans le film en forme de feuille par projection d'un faisceau (3, 4) laser de découpage le long de la circonférence d'une forme sensiblement circulaire entourant la position (2) détectée du centre.

2. Procédé de découpage optique selon la revendication 1, dans lequel le flux lumineux de détection de position est un faisceau laser.

3. Procédé de découpage optique selon la revendication 1, dans lequel une marque (2) de centre est formée à la position du centre sur le film (1) en forme de feuille et la marque (2) de centre est détectée avec le flux lumineux de détection de position.

4. Procédé de découpage optique selon la revendication 1, dans lequel des rainures ou des pré-cuvettes sont détectées par le flux lumineux de détection de position pour déterminer la position (2) du centre.

5. Procédé de découpage optique selon la revendication 1, dans lequel la position (2) du centre est détectée par utilisation de plusieurs flux lumineux de détection de position.

6. Procédé de découpage optique selon la revendication 1, dans lequel le faisceau laser de découpage est divisé en plusieurs faisceaux qui sont utilisés simultanément pour le découpage.

7. Outil de coupe optique comprenant une source (21) de lumière émettant un flux lumineux de détection de position; une source (22) laser émettant un faisceau laser de découpage; un moyen (9, 10) de détection de position pour détecter la position (2) d'un centre sur un film (1) en forme de feuille avec le flux lumineux de détection de position; et un bras (19) pour introduire le faisceau laser de découpage sur le film (1) en forme de feuille, le bras (19) tournant autour de la position (2) détectée du centre.

8. Outil de coupe optique selon la revendication 7, dans lequel le flux lumineux de détection de centre est un faisceau laser.

9. Outil de coupe optique selon la revendication 7, dans lequel la position (2) du centre est détectée par utilisation de plusieurs flux lumineux de détection de position.

10. Outil de coupe optique selon la revendication 7, dans lequel le faisceau laser de découpage est divisé en plusieurs faisceaux qui sont utilisés simultanément pour le découpage.
